# FASCICULE DE BREVET EUROPEEN

(11) **EP 3 081 524 B1**
(45) Date de publication et mention de la délivrance du brevet: **21.03.2018**
(21) Numéro de dépôt: 16164613.8
(22) Date de dépôt: 11.04.2016
(51) Int. Cl.: B66C 23/18, H02G 7/18

(54) **PROTECTION DES VOIES AVEC MAILLAGE**
FAHRBAHNSCHUTZ MIT NETZ
MESH TRACK PROTECTION

(30) Priorité: 13.04.2015 FR 1553192; 21.05.2015 FR 1554558
(43) Date de publication de la demande: 19.10.2016
(73) Titulaire: Salvi, M. Eric, 74270 Sallenoves (FR)
(72) Inventeur: Salvi, M. Eric, 74270 Sallenoves (FR)
(74) Mandataire: Gasquet, Denis

(56) Documents cités:
- FR-A1- 2 967 526
- GB-A- 2 274 473
- DATABASE WPI Week 201251 Thomson Scientific, London, GB; AN 2012-J75689 XP002753120, -& CN 202 285 309 U (HUBEI ELECTRIC POWER TRANSMISSION&TRAN) 27 juin 2012 (2012-06-27)

## Description

La présente invention concerne un système de protection d'un ouvrage lors de travaux aériens le surplombant. L'invention concerne plus particulièrement la protection de voies, notamment de voies autoroutières ou ferroviaires, lors de travaux de maintenance ou d'installation de lignes électriques au-dessus de ces dernières.

La circulation de voie autoroutière ou ferroviaire ne peut être raisonnablement arrêtée pendant une longue durée, sans pénaliser de nombreux usagers et l'exploitant de la voie d'un point de vue financier et logistique.

Un arrêt prolongé n'étant pas envisageable, il est donc nécessaire de proposer un système de protection afin que les travaux soient réalisés en toute sécurité et surtout que le flux de circulation soit arrêté un minimum de temps.

Il est couramment installé des échafaudages de part et d'autre d'ouvrage à traverser, des passerelles sont ensuite positionnées sur ces derniers par des grues. Ces structures imposantes, dans le cas de travaux d'installation ou de maintenance de lignes électriques au-dessus d'une voie, obligent l'arrêt total de la circulation pendant une longue durée.

Afin de limiter le temps d'installation et d'immobilisation de la circulation, des structures fixes pré-montées, telles que des grues, ont été proposées.

Ces structures permettent d'effectuer notamment des opérations d'installation et de maintenance de câbles électriques au-dessus d'un ouvrage à protéger. Ces opérations d'installation ou de remplacement de câbles électriques consistent, en général, au guidage, au tirage et éventuellement au démontage de câbles entre deux pylônes. Ces opérations doivent être impérativement réalisées en toute sécurité, notamment en cas d'un éventuel décrochage de câble et la chute de ce dernier.

Le document FR 2 967 526 divulgue l'installation d'une succession de grues à tour d'un côté d'une voie à protéger, et d'une succession de mâts de grue de l'autre côté. Les grues sont pivotées de manière à ce que leurs flèches respectives reposent sur les mâts montés en opposition. Les flèches traversent donc les voies à protéger. Les flèches sont en outre équipées de tiges permettant de recevoir les lignes électriques aériennes. Ces structures sont conséquentes et nécessitent une modification importante des grues à tours existantes par l'assemblage de tiges spécifiques. Une distance minimale est requise entre chaque grue afin d'éviter toute collision entre leurs flèches respectives au cours des opérations d'installation et de démontage de ces structures.

La présente invention propose ainsi un système de protection d'un ouvrage ainsi que son utilisation, permettant de pallier aux inconvénients précités.

Ainsi, le système de protection de voies autoroutières ou ferroviaires selon l'invention comprend deux ensembles agencés de part et d'autre des voies à protéger, chacun des ensembles comprend au moins deux poteaux connectés par une poutre assemblée aux poteaux par au moins un moyen rotatif de connexion qui se présente par une couronne, tandis que la couronne est surmontée d'un berceau comprenant deux parois latérales de retenue, dans lequel vient s'assembler la poutre.

Selon une caractéristique, chacun des poteaux comprend un moyen rotatif de connexion.

Selon un mode de réalisation, au moins un poteau est un mât de grue à tour.

Selon un autre mode de réalisation, la poutre est un assemblage de profilés métalliques.

Selon une caractéristique supplémentaire, les deux ensembles sont connectés par un maillage de câbles métalliques.

Selon la caractéristique précédente, le maillage comprend au moins deux premiers câbles reliant chacun au moins deux poteaux agencés en opposition de part et d'autre des voies à protéger, tandis qu'au moins un câble de retenue est au moins agencé parallèlement à la voie à protéger.

Selon un mode d'exécution, au moins une extrémité d'un premier câble est reliée à un treuil solidaire d'un poteau.

Selon une autre caractéristique, le maillage comprend au moins un câble supplémentaire agencé, entre deux poutres, tandis qu'au moins une extrémité dudit câble supplémentaire est reliée à un treuil agencé sur une des deux poutres.

Selon un mode de réalisation préféré, l'assemblage de profilés métalliques est un polyèdre à base triangulaire, tandis que des éléments supplémentaires de renfort sont agencés au niveau de l'arrête supérieure du polyèdre à base triangulaire.

L'invention concerne également une utilisation d'un système de protection de voies autoroutières ou ferroviaires selon l'invention, caractérisé en ce que les deux ensembles sont agencés de part et d'autre des voies à protéger.

D'autres caractéristiques et avantages de l'invention se dégageront de la description qui va suivre en regard des dessins annexés qui ne sont donnés qu'à titre d'exemples non limitatifs.
La figure 1 est une vue en perspective du système de protection de voies, selon un mode de réalisation de l'invention.
La figure 2 est une vue de face de la figure 1 selon F.
La figure 3 est une vue de dessus de la figure 1.
La figure 4 est une vue en perspective d'un grossissement de la figure 1.
La figure 5 est vue de face selon E de la figure 4.

Ainsi, le système de protection (100) de voies, selon l'invention, comprend deux ensembles (1) agencés de part et d'autre des voies (2) à protéger. Un ensemble (1) comprend au moins deux poteaux, de préférence deux mâts de grue à tour (3), agencés le long des voies (2) à protéger, connectés par une poutre, préférentiellement un assemblage de profilés métalliques (4). Le système de protection (100) comprend donc deux ensembles (1) parallèles, montés en opposition le long des voies (2) à protéger.

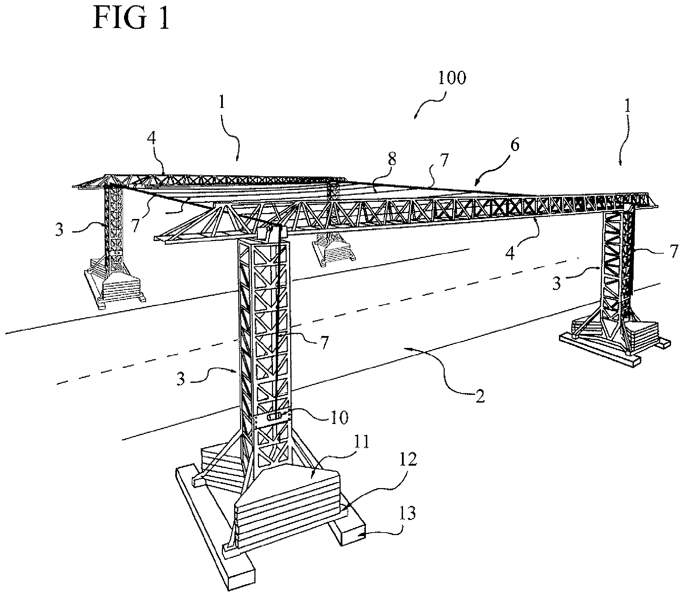

Selon un mode de réalisation, tel qu'illustré à la figure 1, un ensemble (1) est formé de deux mâts de grue à tour (3), connectés par un assemblage de profilés métalliques (4), mais il pourrait en être autrement, un ensemble (1) est avantageusement formé de trois ou quatre ou plus, mâts de grue à tour (3), alignés le long de la voie (2) à protéger, la longueur et la rigidité de l'assemblage de profilés métalliques (4) sont agencées en conséquence.

Ajoutons que qu'une poutre, préférentiellement un assemblage de profilés métalliques (4), est agencée sur des poteaux, préférentiellement des mâts de grue à tour (3) par l'intermédiaire d'au moins un moyen rotatif de connexion, tel qu'une couronne (5), de préférence chacun des poteaux comprend à son extrémité supérieure un moyen rotatif de connexion.

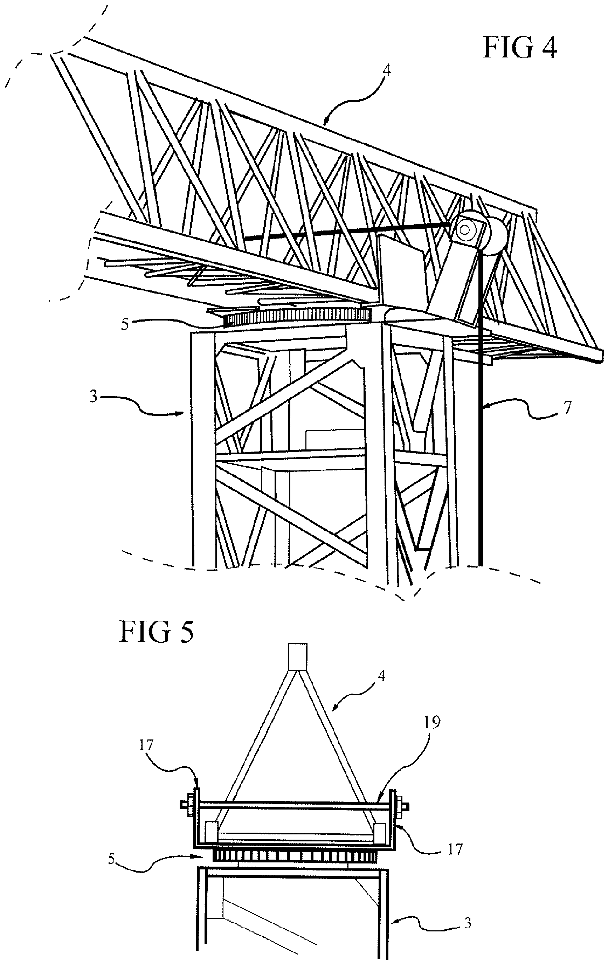

Notons qu'une couronne (5) est agencée sur chacun des mâts de grue à tour (3), telle qu'illustrée à la figure 4, mais il pourrait en être autrement une couronne est agencée sur au moins un des mâts de grue à tour (3) d'un ensemble (1). Une couronne (5) permet le réglage de l'alignement d'un assemblage de profilés métalliques (4) sur au moins un mât de grue à tour (3), de préférence sur chacun des mâts de grue à tour (3).

Précisons qu'une couronne (5), telle qu'illustrée plus en détail à la figure 5, est surmontée d'un berceau comprenant deux parois latérales de retenue (17), dans lequel vient s'assembler la base d'une poutre, préférentiellement la base d'un assemblage de profilés métallique (4). Une tige de blocage (19) traverse avantageusement les parois latérales de retenue (17) et la poutre, préférentiellement l'assemblage de profilés métalliques (4), assurant son maintien en place. Il est entendu que les tiges de blocage (19) sont maintenues en place par des mécanismes de fixation appropriés, tels que par boulonnage.

Une couronne (5) est connectée à un poteau, de préférence un mât de grue à tour (3) par un mécanisme de pivotement, tel qu'une crémaillère.

Selon la configuration du terrain et des voies (2), les faces correspondantes des poteaux, préférentiellement des mâts de grue à tour (3) agencés d'un même côté d'une voie (2) à protéger ne sont pas forcements parallèles. Les couronnes (5) permettent ainsi le pivotement de la poutre, de préférence de l'assemblage de profilés métalliques (4) et l'alignement de ce dernier, mais il pourrait en être autrement, les couronnes (5) sont pré-alignées avant la mise en place d'une poutre, préférentiellement d'un assemblage de profilés métalliques (4).

Selon un mode de réalisation, chacun des moyens rotatifs de connexion assemblés aux poteaux est pré-aligné préalablement à l'assemblage d'une poutre.

Selon le mode de réalisation précédent, chacune des couronnes (5) assemblées aux mâts de grue à tour (3) est pré-alignée préalablement à l'assemblage d'un assemblage de profilés métalliques (4).

Une poutre, de préférence un assemblage de profilés métalliques (4) est avantageusement mis en place à l'aide de grue ou de camion grue.

Notons qu'un mât de grue à tour (3) est conventionnellement formé par un assemblage de profilés en acier, sous une forme de treillis. Cet assemblage de manière conventionnelle constitue un parallélogramme rectangle.

Un assemblage de profilés métalliques (4), est avantageusement formé de profilés en acier, avantageusement sous une forme d'un polyèdre à base triangulaire, tel qu'une flèche de grue, mais il pourrait en être autrement, un assemblage de profilés métalliques (4) est avantageusement formé de deux profilés parallèles connectés par des profilés supplémentaires, sous une forme de treillis.

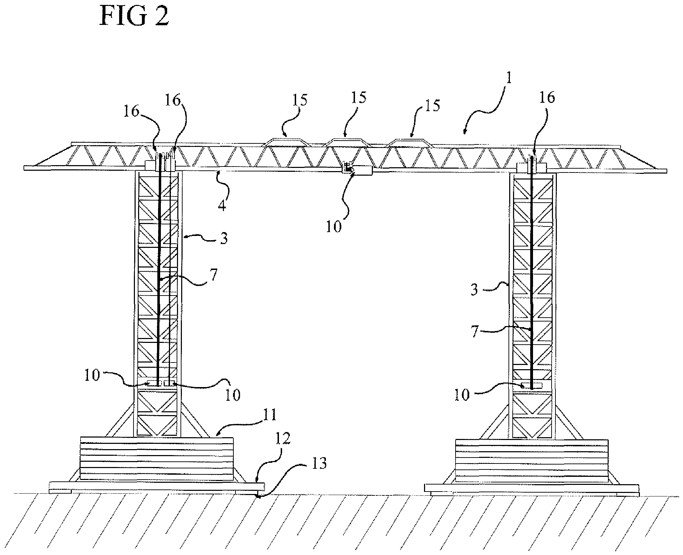

Selon un mode de réalisation, un assemblage de profilés métalliques (4) est renforcé par des éléments supplémentaires (15), avantageusement agencés au point le plus haut de ce dernier, tel qu'illustré à la figure 2. Dans le cas d'un polyèdre à base triangulaire, les éléments supplémentaires (15) sont agencés au niveau de l'arrête supérieure de cet assemblage, afin d'assurer une résistance accrue de la structure lors, par exemple, d'une éventuelle chute de câbles électrique, lors des travaux de maintenance surplombant les voies (2) à protéger.

Selon certaines configurations, les voies (2) à protéger sont en dénivelées, les hauteurs respectives des poteaux, préférentiellement des mâts de grue à tour (3), sont choisies en conséquence, afin de conserver une poutre, de préférence un assemblage de profilés métalliques (4) perpendiculaire à ces derniers.

Ajoutons que les poteaux, de préférence les mâts de grue à tour (3) sont lestés à leurs bases, par des blocs de béton (11) empilés, assurant une stabilisation du système de protection (100).

Précisons que la base des poteaux, de préférence des mâts de grue à tour (3) est sous la forme d'une structure de maintien (12), telle qu'un socle, s'étendant radialement de manière continue ou partielle, autour de l'axe général vertical du mât.

Il est entendu que les blocs de béton (11) empilés sont disposés au-dessus de cette structure de maintien (12).

Selon une caractéristique supplémentaire, des longrines bétons (13), préférentiellement en bétons armés ou précontraints, sont agencées en dessous de chacune des structures de maintien (12), afin d'éviter leurs glissements lors de la mise en tension du maillage (6).

Selon un mode de réalisation, notamment dans le cadre de protection de voies de faible largeur, les poteaux, préférentiellement les mâts de grue à tour (3) sont montés sur un engin mobile. Cette configuration facilite le déplacement du système de protection (100) le long des voies (2) à protéger, sur des travaux de maintenance à différents endroits de lignes électriques.

Selon une alternative de l'invention, un ensemble (1) comprend une grue à tour constituée d'un premier mât de grue à tour (3), d'un assemblage de profilés métalliques (4), sous une forme de flèche de grue, d'une contre-flèche et d'un second mât de grue à tour (3). La contre-flèche constitue le prolongement de la flèche de grue de l'autre côté du premier mât de grue à tour (3). Un contrepoids, formé de blocs en béton, est supporté par l'extrémité de la contre-flèche. L'extrémité de la flèche de grue est en outre supportée par le second mât de grue à tour (3). De préférence, le second mât de grue à tour ne comprend pas de moyen rotatif de connexion. Il est entendu que les deux mâts de grue à tour (3) d'un même ensemble (1) sont agencés d'un même côté des voies (2) à protéger.

Selon une autre alternative, notamment dans le cadre d'une multitude de voies (2) à protéger, donc d'une grande distance entre les deux extrémités des voies (2), un ensemble (1) supplémentaire, constitué de deux poteaux, préférentiellement de deux mâts de grue à tour (3) et d'une poutre, de préférence d'un assemblage de profilés métalliques (4), est agencé avantageusement à mi-distance des voies (2) à protéger, afin de fournir un support supplémentaire au système de protection (100).

Selon un mode d'exécution, au moins un poteau supplémentaire, préférentiellement au moins un mât de grue à tour (3) supplémentaire est agencé entre deux poteaux d'un ensemble (1), notamment dans le cas d'une poutre de grande longueur, préférentiellement un assemblage de profilés métallique (4) de grande longueur.

Selon une caractéristique supplémentaire, les deux ensembles (1) sont en outre connectés par un maillage (6) constitué d'un enchevêtrement de câble métallique. Le maillage (6) est maintenu tendu par au moins un treuil (10) agencé sur au moins un des poteaux, de préférence sur au moins un des mâts de grue à tour (3) d'au moins un ensemble (1).

Selon un mode de réalisation, le maillage (6) comprend au moins deux premiers câbles (7), agencés transversalement aux voies à protéger, reliant chacun deux poteaux, préférentiellement deux mâts de grue à tour (3) agencés en opposition de part et d'autre des voies (2) à protéger.

Selon le mode de réalisation précédent, des poulies (16) supportées par des pièces désaxées (18), par rapport au poteau, préférentiellement au mât de grue à tour (3), permettent le tirage des premiers câbles (7) par les treuils (10) solidaires des poteaux, préférentiellement des mâts de grue à tour (3).

Précisons que les treuils (10) sont avantageusement hydrauliques et sécurisés mécaniquement par des grenouilles tire câble, connectées aux poteaux, de préférence aux mâts de grue à tour (3), assurant une double sécurité en cas de disfonctionnement du treuil (10).

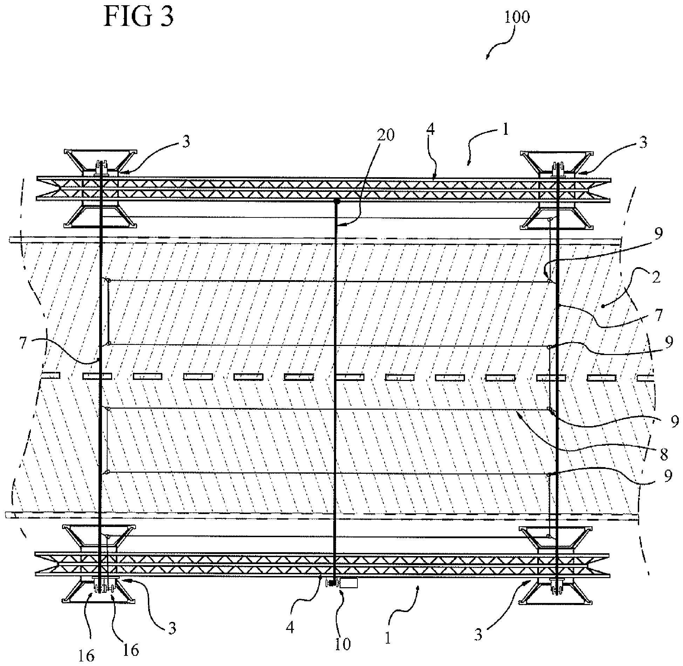

Selon une caractéristique supplémentaire, le maillage (6) comprend en outre une succession de câbles de retenue (8), agencés parallèlement aux voies (2) à protéger, assemblés à des poulies (9) connectées aux premiers câbles (7), tel qu'illustré à la figure 3.

Précisons que les câbles de retenue (8) sont connectés les uns à la suite des autres afin de constituer avantageusement un seul et unique câble de retenue (8) accroché à l'une de ses extrémités soit à un premier câble (7) soit à une des poutres, préférentiellement des assemblages de profilés métalliques (4), tandis que son autre extrémité est reliée, via une poulie (16), à un treuil (10) solidaire d'un des poteaux, de préférence d'un des mâts de grue à tour (3), telle qu'illustré aux figures 2 et 3.

Selon le mode de réalisation précédent, au moins un câble supplémentaire (20), agencé transversalement aux voies à protéger, connecte les deux poutres, de préférence les deux assemblages de profilés métalliques (4) montés en opposition, avantageusement à mi-parcourt de ces derniers. Ce/ces câble(s) supplémentaire(s) est/sont avantageusement connecté(s) à l'une de ses/leurs extrémités à une poutre, de préférence un assemblage de profilés métalliques (4), tandis que son/leurs autres extrémités est/sont reliée(s) à un treuil (10) solidaire d'une des poutres, préférentiellement d'un des assemblages de profilés métalliques (4), telle qu'illustré notamment à la figure 3. Ces câbles supplémentaires (20) participent au maintien et à la tension du maillage (6).

Selon un mode d'exécution, les premiers câbles (7) ne sont pas agencés parallèlement l'un par rapport à l'autre et transversalement aux voies (2) à protéger, mais sont agencés de telle manière à ce que les deux premiers câbles (7) se croisent sensiblement au milieu des voies (2).

Selon un autre mode d'exécution, les câbles de retenue (8), agencés parallèlement aux voies (2) à protéger, sont indépendant et sont fixés aux premiers câbles (7) par des moyens appropriés, tel que des tirants.

Selon un mode de réalisation, un treuil (10) est agencé sur chacun des poteaux, de préférence des mâts de grue à tour (3) d'un ensemble (1) d'un côté des voies (2) à protéger. Une extrémité des premiers câbles (7) est connectée à un treuil (10) d'un côté des voies (2) à protéger, tandis que l'autre extrémité est reliée à la poutre, préférentiellement, à l'assemblage de profilés métalliques (4) du second ensemble (1), de l'autre côté des voies (2).

Selon un autre mode de réalisation, un treuil (10) est agencé sur chacun des poteaux, de préférence chacun des mâts de grue à tour (3) des deux ensembles (1) des deux côtés des voies (2). Les premiers câbles (7) sont ainsi maintenus tirés de part et d'autre, et sont connectés chacun à deux treuils (10) agencés de part et d'autre en opposition du système de protection (100).

Selon un mode d'exécution, deux ensembles (1) sont connectés par un filet, constitué d'un maillage (6) de câbles métalliques ou de cordes synthétiques voire composites.

Selon un autre mode d'exécution, deux ensembles (1) sont connectés par une succession de câbles (7, 20), à savoir deux premiers câbles (7) et une succession de câbles supplémentaires (20), reliant les deux poutres montées en opposition, préférentiellement les deux assemblages de profilés métalliques (4) montés en opposition.

Selon le mode d'exécution précédent, un filet est posé et assemblé sur la succession de câbles (7, 20) reliant les deux poutres montées en opposition, préférentiellement les deux assemblages de profilés métalliques (4) montés en opposition, formant un maillage (6) de câbles métalliques.

Le maillage (6) est avantageusement mis en place à l'aide de grue ou de camion grue, mais il pourrait en être autrement, le maillage (6) est pré-installé au sol, pré-assemblé aux poutres, préférentiellement aux assemblages de profilés métalliques (4) agencés en opposition. Ces derniers sont avantageusement mis en place à l'aide de camion grue.

Afin de participer au soutènement du système de protection (100), des câbles de maintien relient avantageusement les poutres, de préférence des assemblages de profilés métalliques (4) aux bases des poteaux, de préférence des mâts de grue à tour (3).

## Revendications

1. Système de protection (100) de voies autoroutières ou ferroviaires comprenant deux ensembles (1) agencés de part et d'autre des voies (2) à protéger, chacun des ensembles (1) comprend au moins deux poteaux connectés par une poutre, tandis qu'une poutre est assemblée aux poteaux par au moins un moyen rotatif de connexion qui se présente par une couronne (5), **caractérisé en ce que** la couronne (5) est surmontée d'un berceau comprenant deux parois latérales de retenue (17), dans lequel vient s'assembler la poutre.

2. Système de protection (100) selon la revendication 1, **caractérisé en ce que** chacun des poteaux comprend un moyen rotatif de connexion.

3. Système de protection (100) selon la revendication 1 ou 2, **caractérisé en ce qu'**au moins un poteau est un mât de grue à tour (3).

4. Système de protection (100) selon l'une quelconque des revendications précédentes, **caractérisé en ce que** la poutre est un assemblage de profilés métalliques (4).

5. Système de protection (100) selon l'une quelconque des revendications précédentes, **caractérisé en ce que** les deux ensembles (1) sont connectés par un maillage (6) de câbles.

6. Système de protection (100) selon la revendication précédente, **caractérisé en ce que** le maillage (6) comprend au moins deux premiers câbles (7) reliant chacun au moins deux poteaux agencés en opposition de part et d'autre des voies (2) à protéger.

7. Système de protection (100) selon la revendication 5 ou 6, **caractérisé en ce que** le maillage (6) comprend au moins un câble de retenue (8) au moins agencé parallèlement à la voie à protéger.

8. Système de protection selon la revendication 6 ou 7, **caractérisé en ce qu'**au moins une extrémité d'un premier câble (7) est relié à un treuil (10) solidaire d'un poteau.

9. Système de protection (100) selon l'une quelconque des revendications 5 à 8, **caractérisé en ce que** le maillage comprend au moins un câble supplémentaire (20) agencé, entre deux poutres.

10. Système de protection (100) selon la revendication précédente, **caractérisé en ce qu'**au moins une extrémité du câble supplémentaire (20) est reliée à un treuil (10) agencé sur une des deux poutres.

11. Système de protection (100) selon l'une quelconque des revendications 4 à 10, **caractérisé en ce que** l'assemblage de profilés métalliques (4) est un polyèdre à base triangulaire.

12. Système de protection (100) selon la revendication précédente, **caractérisé en ce que** des éléments supplémentaires de renfort (15) sont agencés au niveau de l'arrête supérieure du polyèdre à base triangulaire.

13. Utilisation d'un système de protection (100) de voies autoroutières ou ferroviaires selon l'une quelconque des revendications 1 à 12, **caractérisé en ce que** les deux ensembles (1) sont agencés de part et d'autre des voies (2) à protéger.

## Patentansprüche

1. Schutzsystem (100) zum Schutz von Autobahn- bzw. Eisenbahnstrecken, enthaltend zwei Anordnungen (1), die beiderseits der zu schützenden Strecken (2) angeordnet sind, wobei jede der Anordnungen (1) zumindest zwei Stützen umfasst, die über einen Balken verbunden sind, während ein Balken über zumindest ein als Kranz (5) ausgebildetes drehendes Verbindungsmittel an die Stützen angefügt ist, **dadurch gekennzeichnet, dass** der Kranz (5) von einem Gestell überragt wird, das zwei seitliche Haltewände (17) umfasst und in welchem der Balken sich zusammensetzt.

2. Schutzsystem (100) nach Anspruch 1, **dadurch gekennzeichnet, dass** jede der Stützen ein drehendes Verbindungsmittel umfasst.

3. Schutzsystem (100) nach Anspruch 1 oder 2, **dadurch gekennzeichnet, dass** zumindest eine Stütze ein Mast eines Turmkrans (3) ist.

4. Schutzsystem (100) nach einem der vorangehenden Ansprüche, **dadurch gekennzeichnet, dass** der Balken eine Zusammensetzung von Metallprofilen (4) ist.

5. Schutzsystem (100) nach einem der vorangehenden Ansprüche, **dadurch gekennzeichnet, dass** die beiden Anordnungen (1) über ein Netz (6) aus Seilen verbunden sind.

6. Schutzsystem (100) nach dem vorangehenden Anspruch, **dadurch gekennzeichnet, dass** das Netz (6) zumindest zwei erste Seile (7) umfasst, die jeweils zumindest zwei Stützen verbinden, die beiderseits der zu schützenden Strecken (2) gegenüberliegend angeordnet sind.

7. Schutzsystem (100) nach Anspruch 5 oder 6, **dadurch gekennzeichnet, dass** das Netz (6) zumindest ein Halteseil (8) enthält, das zumindest parallel zur zu schützenden Strecke angeordnet ist.

8. Schutzsystem (100) nach Anspruch 6 oder 7, **dadurch gekennzeichnet, dass** zumindest ein Ende eines erstes Seils (7) mit einer fest mit einer Stütze verbundenen Seilwinde (10) verbunden ist.

9. Schutzsystem (100) nach einem der Ansprüche 5 bis 8, **dadurch gekennzeichnet, dass** das Netz zumindest ein Zusatzseil (20) enthält, das zwischen zwei Balken angeordnet ist.

10. Schutzsystem (100) nach dem vorangehenden Anspruch, **dadurch gekennzeichnet, dass** zumindest ein Ende des Zusatzseils (20) mit einer Seilwinde (10) verbunden ist, die an einem der beiden Balken angeordnet ist.

11. Schutzsystem (100) nach einem der Ansprüche 4 bis 10, **dadurch gekennzeichnet, dass** die Zusammensetzung von Metallprofilen (4) ein Polyeder mit dreieckförmiger Grundfläche ist.

12. Schutzsystem (100) nach dem vorangehenden Anspruch, **dadurch gekennzeichnet, dass** zusätzliche Verstärkungselemente (15) im Bereich der oberen Kante des Polyeders mit dreieckförmiger Grundfläche angeordnet sind.

13. Verwendung eines Schutzsystems (100) zum Schutz von Autobahn- bzw. Eisenbahnstrecken nach einem der Ansprüche 1 bis 12, **dadurch gekennzeichnet, dass** die beiden Anordnungen (1) beiderseits der zu schützenden Strecken (2) angeordnet sind.

## Claims

1. Protection system (100) for road or railway tracks comprising two assemblages (1) arranged on either side of the tracks (2) to be protected, each of the assemblages (1) comprises at least two posts connected by a beam, while one beam is assembled to the posts by at least one rotary connection means which is in the form of a ring (5), **characterised in that** the ring (5) is surmounted by a cradle comprising two lateral retaining walls (17), in which the beam will be fitted.

2. Protection system (100) according to claim 1, **characterised in that** each of the posts comprises a rotary connection means.

3. Protection system (100) according to claim 1 or 2, **characterised in that** at least one post is a tower crane mast (3).

4. Protection system (100) according to any one of the preceding claims, **characterised in that** the beam is an assembly of metal profiles (4).

5. Protection system (100) according to any one of the preceding claims, **characterised in that** the two assemblages (1) are connected by a mesh (6) of cables.

6. Protection system (100) according to the preceding claim, **characterised in that** the mesh (6) comprises at least two first cables (7) each connecting at least two posts arranged opposite one another on either side of the tracks (2) to be protected.

7. Protection system (100) according to claim 5 or 6, **characterised in that** the mesh (6) comprises at least one retaining cable (8) at least arranged parallel to the track to be protected.

8. Protection system according to claim 6 or 7, **characterised in that** at least one end of a first cable (7) is connected to a winch (10) integral with a post.

9. Protection system (100) according to any one of claims 5 to 8, **characterised in that** the mesh comprises at least one additional cable (20) arranged between two beams.

10. Protection system (100) according to the preceding claim, **characterised in that** at least one end of the additional cable (20) is connected to a winch (10) arranged on one of the two beams.

11. Protection system (100) according to any one of claims 4 to 10, **characterised in that** the assembly of metal profiles (4) is a triangular-based polyhedron.

12. Protection system (100) according to the preceding claim, **characterised in that** additional reinforcing elements (15) are arranged at the upper edge of the triangular-based polyhedron.

13. Use of a protection system (100) for road or rail tracks according to any one of claims 1 to 12, **characterised in that** the two assemblages (1) are arranged on either side of the tracks (2) to be protected.
